# EUROPEAN PATENT SPECIFICATION

(11) **EP 3 971 756 B1**
(45) Date of publication and mention of the grant of the patent: **15.04.2026**
(21) Application number: 21194930.0
(22) Date of filing: 03.09.2021
(51) Int. Cl.: G06F 30/12, A41H 3/00, G06F 3/04812, G06F 3/04842, G06F 3/0482, G06F 113/12

(54) **COMPUTER-IMPLEMENTED METHODS FOR ENHANCING, HANDLING, AND RESIZING 3D GARMENT MODELS**
COMPUTERIMPLEMENTIERTE VERFAHREN ZUR VERBESSERUNG, HANDHABUNG UND GRÖSSENÄNDERUNG VON 3D-KLEIDUNGSMODELLEN
PROCÉDÉS MIS EN OEUVRE PAR ORDINATEUR PERMETTANT D'AMÉLIORER, DE MANIPULER ET DE REDIMENSIONNER DES MODÈLES DE VÊTEMENT 3D

(30) Priority: 21.09.2020 US 202017027540
(43) Date of publication of application: 23.03.2022
(73) Proprietor: Clothing Tech LLC, Austin, TX 78750 (US)
(72) Inventor: WILCOX, William, Austin, TX 78735 (US)
(74) Representative: Kaminski Harmann

(56) References cited:
- WO-A1-2020/181286
- US-A1- 2011 166 682
- US-A1- 2019 272 679

## Description

### FIELD OF THE INVENTION

The present invention relates to a computer-implemented method for embedding a manufacturing definition model into a first 3D garment model representing a first garment to be fabricated.

### BACKGROUND OF THE INVENTION

In the garment industry, it is a known process to import a garment pattern, i.e. a collection of 2D drawings of panels of a garment, into a Computer Aided Design (CAD) program on a computer in order to virtually assemble the garment with a computer mouse. Usually, each panel is dragged over an avatar and rotated and moved into roughly its correct pose on the avatar, which can be done in 3D or in a 2D projection of the avatar. After the pieces are roughly orientated and placed around the avatar, the edges where the single panels are to be connected need to be selected manually.

For manufacturing, all the details of how to manufacture the garment based on those pieces have to be elaborated and described in detail, comprising items like material, color, orientation, exact position, etc. These process steps are very tedious, take a long time, and are error-prone.

It is current state of the art that the technical definition of a garment is specified in two or more documents. One document is the garment pattern as mentioned above (often a 2D CAD model in DXF format) containing the pattern shapes and used for cutting out the different garment panels from cloth that are then assembled to arrive at the garment. Another document is a file or a set of files that contain said assembly instructions and other details in a human readable format such as an Excel spreadsheet or a PDF file. These kind of documents defining the garment are often referred to as a "Tech Pack". The human readable instructions usually contain information about which fabric to use, what colors, what thread and stitch types, what finishes, what trims (buttons, zippers, hooks, etc.) to process, and so on. Also, size measurements in a chart for the different sizes of garments to be produced may be comprised by the "Tech Pack". These manufacturing instructions or definitions are not computer-readable as opposed to the garment patterns, which, depending on their file format, may be available in a computer-readable format. Sometimes, the garment patterns are even not digitally available, but only as a hand drawing.

Examples can e.g. be found in US 16/863,773, US 16/863,802, US 16/863,817, US 2011/166682, WO 2020/181286 and US 2019/272679.

Some workflows also utilize software packages like CLO3D, MakeMyPattern, FreeSewing, Valentina-Project, Techpacker, PatternMaker, InKreate, Marvelous Designer, TAAS (technology advanced apparel service), Wild Ginger Software (Cameo), TUKATECH-Software, Cochenille Design Studio, Garment Maker, or Cloth in 3Ds Max to assist various stages of the garment creation process and/or use zozo-suits or other body scanning technology on the customer to improve individual personal fits.

The state of the garment industry today is further that there are millions of patterns (e.g. 2D CAD (DXF) garment pattern files) with their corresponding human readable manufacturing definitions ("Tech Packs") but very few corresponding virtual 3D garment models, which are sometimes also referred to as "virtual samples". This is, as mentioned above, because the conversion of what the industry has into 3D models is manual and tedious. The conversion becomes even more complicated if different versions of the same garment ("colorways") are to be embraced.

Because of these difficulties, the industry so far merely utilizes these low-detail "virtual samples" for visualization purposes.

Further problems occurring in the art and solved by the present disclosure are addressed further below.

### OBJECT OF THE INVENTION

The invention according to claim 1 and the further embodiments, defined in the dependent claims 2-14 provide computer-implemented methods that help overcoming these difficulties and satisfying a vast backlog demand. Methods according to the invention allow for reductions of working time, manpower, paperwork, and/or inconsistences.

### SUMMARY OF THE INVENTION

The invention is defined in independent claim 1 with further embodiments being specified in the dependent claims 2 - 14.

### FURTHER ASPECTS OF SOME EMBODIMENTS

In general, it is the purpose of the computer-implemented method to eliminate the need to produce and manage separated assembly instructions for the factory. Only the 3D garment model file needs to be sent and the factory has every detail of how the garment is to be produced, without requiring supplemental files and documentation. Further, by going away from the usual written explanations and instructions, communication between a design team and a manufacturing plant happens language-independent. Thus, a 3D garment model with embedded manufacturing definition model(s) is unambiguously comprehensible worldwide.

As part of an exemplary common garment manufacturing process, once the design team is close to finalizing a new garment design, they must produce the human readable instructions ("Tech Pack") for the factory. Those documents plus the pattern documents are then sent to the factory so that they can produce one or more sample garments. These garments are then verified by the design team to make sure that the factory has correctly understood all the instructions. This process is prone to error as the instructions are often not clear or are incomplete. The result is iteration between the design team and the factory which can delay the start of production.

For example, with the computer-implemented method, drawbacks of manually generating and transmitting these human readable instructions are overcome. A "digital twin" of the garment is provided having all the details of assembly and finishes embedded into one unified file that contains the entire definition of the garment design and garment production. Information that was previously manually produced and provided in human readable format, often in multiple separate files, is already included into the digital twin, in particular by way of a 2D or 3D definition. A factory receiving such a single 3D model file can open it with the according computer software, look at the garment in 3D, and read off finishing and production related details like seams, trims, finishes, fabrics, etc. Optionally, the computer program can provide the regarding elements of the garment as access elements by which, when selected on a GUI, more details may be presented in the software.

Still referring to the computer-implemented method, the manufacturing parameters can be used in two general ways. Firstly, they may define how two pieces of cut cloth are to be joined or sewed together. Other examples are instructions for the assembly of a pocket or belt loops. Secondly, they may refer to the way of completing specific aspects of the garment such as a neck opening, a waist opening, an end of a sleeve, a bottom of a pant leg, or a bottom of a dress or skirt etc. For example, a neck opening can be finished by a collar with a collar stand. It can also be finished with what is called a binding (t-shirt) and also just a collar or just a collar stand. There are many different ways of finishing the top of a skirt or trousers as well: it could be elastic as known from sweatpants, it could be a strip of cloth like a jeans waistband etc. There is also the concept of closures (e.g. zippers, buttons, etc.), embellishments (e.g. ornaments, prints, etc.), and finishes (e.g. chemical or mechanical treatments, etc.). The aforementioned exemplary parameters and the corresponding tangible elements of the garment are represented by said manufacturing definition model. The manufacturing definition model hence has all the information required for manufacturing the respective garment element.

Further, the manufacturing instructions describing how to manufacture the garment element may comprise at least one of: color swatches, color indicators, stitch types, and stitch designations.

In some embodiments the garment element is not a garment panel per se. However, the garment element may in other embodiments still refer to, or be, a garment panel. Specifically, the different versions of the manufacturing definition models may represent different styles of the same type of garment. That means, for example, a jacket may be available in two different color combinations: a first one having light brown as main color (e.g. the color of all garment panels) with dark brown buttons and stitches, and a second one having a dark brown main color with light brown buttons and stitches. In this case, there are manufacturing definition models representing the garment panels, some representing the stitches, and others representing the buttons. All of these manufacturing definition models are available in the two above-mentioned different color versions. As well, a shirt may be available with several different types of collars, wherein when switching between the versions of the manufacturing definition models, the corresponding 3D garment model displayed on a GUI will be shown with the different collar types while the rest of the shirt being unchanged.

As an example, a new digital 3D garment design file from a designer, i.e. the 3D garment model, can be loaded in the computer program product, which is providing the graphical user interface for interacting with the 3D garment model. The 3D garment model may then be finished e.g. by selecting the correct finishes, trims, fabrics etc. Any change or edit of those finishing features by the program can be re-visualized in the modified garment in 3D, so that a design team can immediately verify that the "virtual" garment is correctly representing the intended design. Once the design team is satisfied with the digital twin, the factory will need no additional instructions, documentation and paperwork, as all the required information for correctly producing the garment is already included in the 3D garment model. It is however possible that factories may need to adjust the 3D design due to producibility issues. In this case, according to a second computer-implemented method, the manufacturing definition model(s) of the 3D garment model can be modified at the factory and then digitally approved by the design team. Such an approval process is a common issue in the industry. The fact that the manufacturing definition model(s) representing the garment element(s) and comprising all manufacturing parameters necessary to manufacture the garment are included in the 3D garment model makes the exchange a whole lot easier and more efficient.

Finally referring to an example of a third computer-implemented method, the second 3D garment model may be designed by a garment designer choosing the garment dimensions such that the second 3D garment model fits the first 3D avatar with a certain "ease". The purpose of the "ease" is to provide more comfort for the customer of the garment and/or give him more freedom of movement. This "ease" can mathematically be described as placement of the second 3D garment on the first avatar with respect to all dimensions (also vertically). The modification of the garment dimensions of the second 3D garment model may be described as changing the shape of the garment in non-uniform ways. In particular, the modification is a non-linear reshaping, wherein the avatar dimensional and proportional differences are taken into account. The differences may in particular be calculated according to a plurality of different shape parameters (in particular 60, 100, or even more) comparing the first and second avatar. The differences may mathematically be described as forces or vectors or a matrix, which can be applied to the garment according to said plurality of shape parameters.

For example, a designer and pattern maker are working together to create the new garment that will fit a "sample" size person, which represents an ideal or average body shape that is presenting the garment design well. When the design is finalized, a step called "grading" is performed, where designer and pattern maker modify different sets of the 2D pattern piece shapes to be larger or smaller, so that the garment can fit on many different body sizes and shapes. Traditionally, this grading or pattern modification requires skills and experience of the design team and bases on specifically applied brand size standards.

Therefore, within the example of the third computer-implemented method, an approach is provided that automizes this tedious process and at the same time is highly precise. By means of the program code, the excess fabric or "ease" of the garment around the 3D avatar is digitally determined. This amount of ease is then translated onto a differently sized avatar that represents a larger or smaller size, or a specific body shape of an individual customer or a class of customers. Therefore, the grading can also take into account body shapes that fall short of the standard. Preferably, the amount of ease is applied proportionally to another avatar in order to achieve a similar look. Thus, the above approach can also be applied in a built-to-order garment manufacturing, wherein a customer-provided avatar of his body is used in the third computer-implemented method. Optionally, the customer may be provided with a functionality to further input individual parameters according to his preferences of ease, comfort, tightness, etc. - for example as user configurable parameters or based on his preferences which can in an embodiment also be automatically derived from his previous garment purchases, garment-returns, his feedback, social media posts, etc.

Instead of going the customized way, the 3D measurement or avatar of the customer can also be compared to the available standard sizes, in particular including his desired level of ease or further shape parameters, so that a standard size is chosen for the grading which is closest to the customer shape.

Using the third computer-implemented method, a batch process may be implemented having as input one designed 3D garment model and outputting several sets of 2D patterns pieces, each set belonging to a different clothes size.

The computer-implemented methods as presented herein should not necessarily be understood as being separate ideas. As the methods are all involved in the garment design process, there are embodiments of the invention, in which the methods are combined in any possible variation of the aspects as presented herein.

The invention also covers 3D garment design programs that is configured for carrying out on a computer the computer-implemented methods as disclosed herein. In particular, each of the 3D garment design programs may be combined to one single 3D garment design program. Further, each of the 3D garment design programs may be considered a 3D CAD software with connectivity interfaces and special functionalities specifically designed for generating, enhancing, handling, managing, resizing, or grading 3D garment models.

### BRIEF DESCRIPTION OF THE DRAWINGS

By way of example only, preferred embodiments of the invention will be described more fully hereinafter with reference to the accompanying figures, wherein:
Figure 1 shows a mannequin dressed with a t-shirt;
Figure 2 shows an example of a virtually 3D designed garment on an avatar;
Figure 3 shows a 3D garment model with examples of manufacturing definition models;
Figure 4 shows a file as appearing on a GUI and containing the 3D garment model including manufacturing definition model(s);
Figure 5 shows 2D pattern pieces also included in the file from fig. 4;
Figure 6 shows what a basic 3D garment model is composed of;
Figure 7 shows a document describing the manufacture of a t-shirt as used in the prior art;
Figures 8-10 show retrieving manufacturing instructions embedded into the 3D garment model according to an example of the first computer-implemented method;
Figure 11 shows the steps of the second computer-implement method;
Figures 12-14 indicate the numerical determination of the differences between the first and second 3D avatar;
Figures 15-19 show the process of modifying the third 3D garment model with respect to size and/or shape based on a determined differences between two avatars;

### DETAILED DESCRIPTION OF THE DRAWINGS

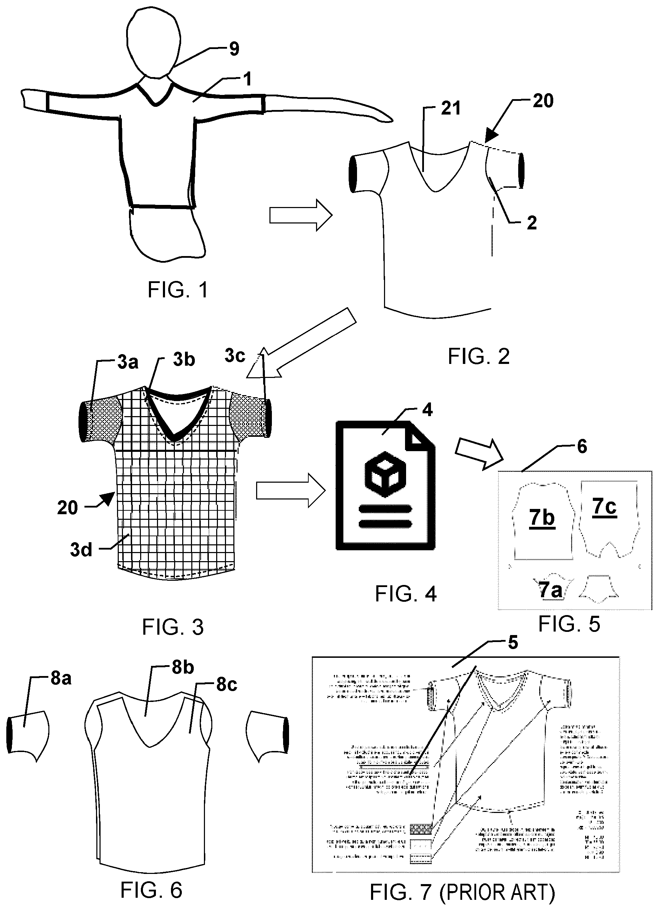

Fig. 1 shows an example of a garment 1 to be fabricated in reality, in this case a t-shirt worn by a mannequin 9. A 3D garment model 20 is provided representing this garment 1. The model 20 can for example be designed by a designer on a 3D garment model design program. The 3D garment model 20 may as well be loaded from a garment library, loaded from an online shop, generated by an artificial intelligence system, etc. The 3D garment model 1 can be displayed on a graphical user interface (GUI) of the design program as dressing an visible or transparent avatar, a form (such as a hanger), or a scanned human body model, and is e.g. presented on a computer screen or with a virtual or augmented reality system as GUI.

In fig. 2, the garment is shown in its basic form and may comprise some default garment features (a standard seam) or just lines 2 as a rule how the garment components (see fig. 6) are assembled. Such a basic model is sometimes used in the industry for visualization purposes.

The manufacturing definition models 3a-d in Fig. 3 may be determined by a designer or pattern maker, preferably in a programmed interactive user guidance process on the GUI. In other embodiments, the manufacturing definition models may however also at least in part be generated automatically by an algorithm or by an artificial intelligence system analyzing documentation, in particular "Tech Packs". For example, shape and/or locations of seams and buttons can be generated automatically, optionally also a stitch-type and stitch-parameters that are required for the type of cloth that is used.

For example, a user about to generate the manufacturing definition models has at hand the basic model 20 as shown in fig.2 displayed on a GUI. He may then select areas on the virtual garment upon which the GUI may offer him a collection of possible options of which he may select one. Specifically, the designer may click on the neck opening 21 and the GUI of the design program shows a list of possible hems, collars, and collar stands. When the designer is selecting one of the listed items, a manufacturing definition model 3b is embedded into the 3D garment model 20 (see fig. 3). However, there may be many different ways of generating such manufacturing definition models, such as a more sophisticated manual way with numerical parameters to fill out in a prompt window. The user may also modify the embedded manufacturing definition model afterwards, e.g. by dragging the parts of the model in a desired direction so as to change its dimensions.

Fig. 4 indicates the single data file 4 which includes the 3D garment model 20 enhanced with manufacturing definition model(s) 3. Fig. 5 shows 2D pattern pieces 7a-c on a document 6. This document 6 may also be contained in the file 4. When the model 20 is enhanced with the manufacturing definition models 3, the document 6 may be automatically updated in the background, resulting in modified pattern pieces and/or addition/deletion of pattern pieces. The document 6 is usually used by the manufacturing team to cut out the corresponding garment panels by which the garment is assembled (the virtual garment panels 8 are shown in fig. 6). Fig. 7 shows an exemplary "Tech Pack" 5 as used in the industry and explaining all the details necessary for manufacturing the garment. All these information are now included in the model 20 by the manufacturing definition models 3.

According to the invention, the computer-implemented method comprises providing manufacturing instructions. These can also be embedded into the file 4 of the 3D garment model 20 automatically, derived from the manufacturing definition model 3. For example, if the manufacturing definition model defines a specific stitch used for assembling the garment panels 8, the computer implemented method may provide explanations, description, or instructions as to how, when, and/or where to sew the panels together. This automatic extraction might be possible because the instruction is inherently defined by the manufacturing definition model. The according element of the garment may be declared as an access element for retrieving the manufacturing instructions interactively in the GUI.

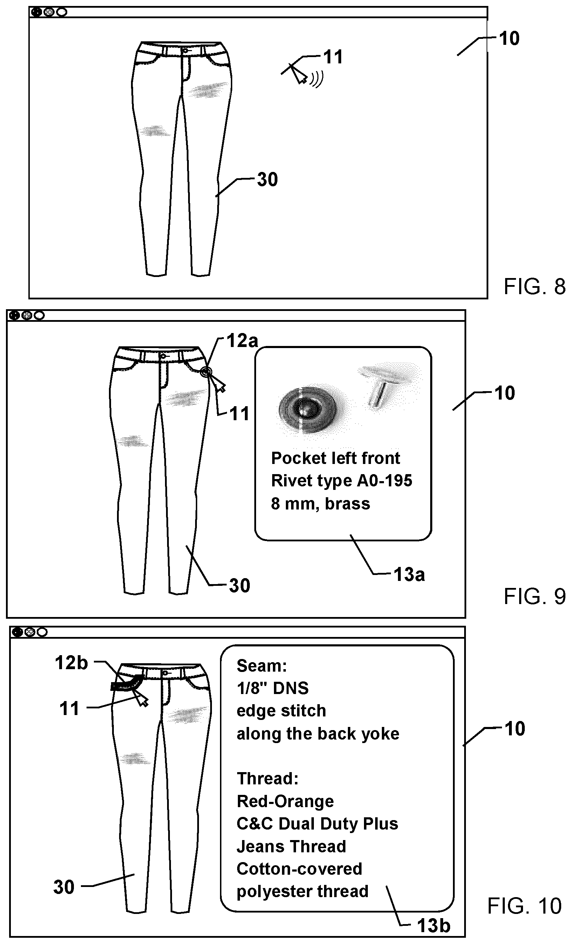

Figs. 8-10 show examples of retrieving these more detailed information linked to the manufacturing definition models in form of graphics and text. A portion of a user interface 10 or window of an embodiment of the computer-implemented method is shown here. Instead of showing the 3D garment model 30 alone, it may also be displayed on a 3D avatar of a human body (part). The pointing element 11 (e.g. a mouse cursor, a stylus, a touchscreen interface, a virtual reality navigation unit, etc.) is provided for applying different operation on the virtual garment and/or the user interface, e.g. in designing and/or finishing the garment to result in the shown 3D garment model 30.

Fig. 9 and Fig. 10 show aspects that may be used in the computer-implemented method as presented herein, based on the view in Fig. 8. The purpose of this aspect is to virtually provide information on how to manufacture the garment, which is represented by the 3D garment model 20 and its manufacturing definition models 12.

The manufacturing definition model 12a is representing a rivet on the pocket of the jeans 1. The model 12, in particular including an area surrounding the model 12a, is determined as an access element. When the cursor 11 is hovering over the access element or selecting it, an extra window 13a is opening containing a high-resolution depiction of the rivet and showing the exact specification of the part. Additionally or alternatively, the window 13a may also comprise a video or illustration on how to manufacture the element. If applicable for the clicked item, it could also comprise information of color, type, tool to be used, setting of the tool, dimensional information of the feature, etc.

In Fig. 10 the access element 12b is hovered over by the pointing element 11, and the manufacturing instruction 13b stored in the file corresponding to the manufacturing definition model (pocket seam) is displayed.

The GUI of this garment design program may be shown on a screen of a computer, on a tablet PC, a smartphone, an augmented reality device, or an artificial reality system, etc. in 2D or 3D.

Displaying the manufacturing instruction is an optional feature as all the information necessary to produce the garment are already defined by the manufacturing definition models. They merely render a support for more unexperienced workers or in case there is an unexpected ambiguity.

Instead of opening up an extra instruction window 13, in an embodiment, the access element could also trigger the 3D garment model 30 to turn and enlarge in order to provide a more detailed view of the corresponding manufacturing definition model.

Leaving this specific example again and going back to schematic figure 3, preferably, there is a plurality of manufacturing definition models embedded in the 3D garment model 20, such as exact representations of fabrics and colors 3d, types of seams 3a, types of stitches 3b, decorative elements like stitches, applications 3c, specific types of buttons, models of zippers, bows, aperture, etc. Everything that is realized in the garment finds its representations in the high-resolution, high-detail manufacturing definition models.

Fig. 4 illustrates that everything needed at the factory for manufacturing the garment is particularly included in one single file 4, preferably stored on the machine readable medium, as one or more database entries, or on a cloud storage, etc. It would be suitable to call the file a "Garment Digital Twin" file 4 as it reflects the real garment in high-definition with every detail needed for assembly and finishing.

Fig. 5 shows an example of the 2D pattern pieces by which the 3D garment model 20 is virtually assembled according to the "rules" 2 (e.g. defining with how much excess cloth the panels are sewed together) and which are comprised in file 4. For example a sleeve-portion 7a, a front-portion 7b and a back-portion 7c are the basic parts of the t-shirt 1. The document 6 could e.g. be a document like a Computer Aided Design (CAD) file, a Portable Document Format (PDF) file, a cutting file, a g-code file, an image file in any format, or any other file containing computer-readable or human-readable 2D shapes of pattern pieces. In the shown example, the 2D pattern document 6 also contains representations of a hem element to be sewed in the neck opening to strengthen the garment. This neck opening is defined by the manufacturing definition model 3b.

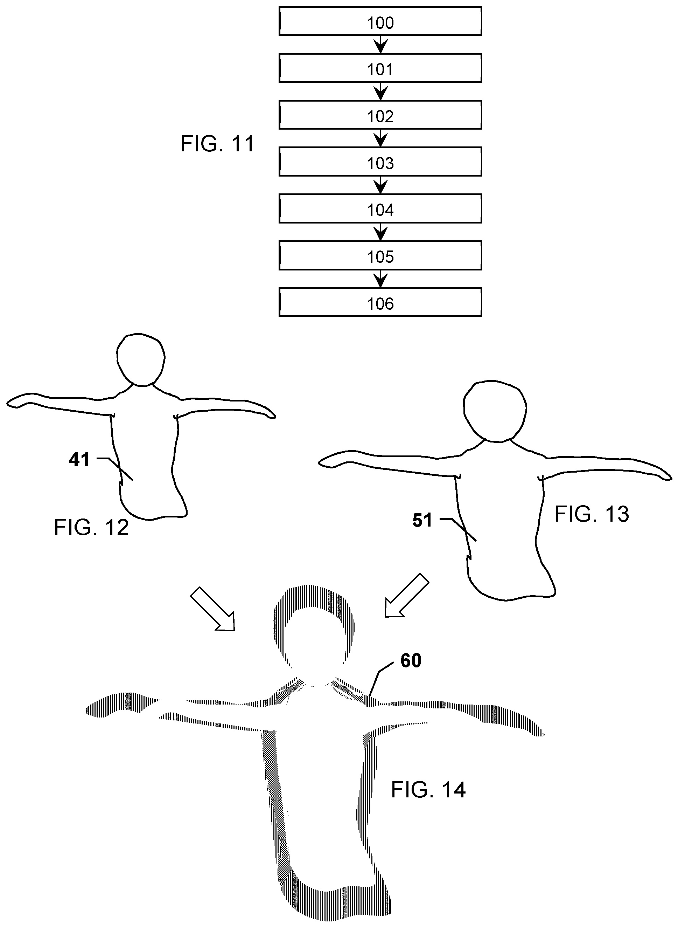

Fig. 11 refers to the second computer-implemented method. At initial step 100, a graphical user interface (GUI) of a 3D garment model design program is provided with at least a first and a second access point. For example, the design program is running on a cloud server, to which the two access points have access. The first access point may be the designer's office in the USA, and the second access point may be in Vietnam at the manufacturer. As an example, an access point may be a simple remote terminal comprising a display and a human-machine-interface (e.g. a computer mouse). As known in the art of personal computers, the access points and the computer running the program may be chosen in an even more advanced or in a more conventional way, such as both the designer and the factory having their own computer, running the same 3D model design program, each computer also having a corresponding access point with a GUI.

At step 101, the second 3D garment model is generated via the GUI at the first access point. In other words, the designer or design team is designing a new garment design by generating the second 3D garment model with help of the GUI.

At step 102, the second 3D garment model is provided at the second access point. Sticking to the example from above, that means that the newly created 3D garment model is transferred to the factory (e.g. sent by email or other channels) or simply retrieved by the second access point in Vietnam since the file of the second 3D garment model is and stays on the remote server.

At step 103, the second 3D garment model is modified via the GUI at the second access point. In case the factory workers reviewing the 3D garment model find out that at least an aspect of the 3D model cannot be realized in the their factory (be it for the lack of tools, skills, or merely a mistake built in by the designers), the 3D garment model can be adjusted or modified, in particular with regard to manufacturing definition models, by the manufacturing team by means of the GUI.

At step 104, the modified second 3D garment is provided at the first access point. Again, this means e.g. that the modified file containing the modified 3D garment model is sent back, or the designer or design team in the USA is merely opening the modified file stored on the server.

At step 105, an approval indicator is associated with the modified second 3D garment model via the GUI at the first access point. The designers can thus approve of the modification and release the file. As an optional intermediate step, the designers can also adjust the modifications in case the manufacturer also made a mistake or the designers are not satisfied with the design and agree to a new compromise.

At step 106 finally, the approved modified second 3D garment model is provided at the second access point. In other words, to stick to the above example, the file is sent back again to Vietnam, or the manufacturer retrieves the approved modified 3D model from the server.

Figs. 12-19 show an embodiment of the third computer-implemented method for grading a designed 3D garment model 40 automatically to arrive at a different size and/or shape and get the 2D patterns for this different size. The 3D garment model 50 modified in this way maintains the ease, grain, line, balance, etc. of the original garment, so that the feeling of the garment when worn will be the same and as intended by the designer for costumers of all shapes and sizes.

The ease refers to the amount of roominess in a specified garment. There are two kinds of ease, a fitting ease and a design ease. A garment must contain adequate ease beyond the actual measurements of the wearer to allow room for ordinary human body movements like arm movements, walking, sitting, riding and even breathing.

Fig. 12 shows an avatar 41 which was used by the designer for designing a t-shirt 40. It is important to note that the designed t-shirt 40, which is a 3D garment model, has size, shape, and proportions intended to fit a person having the dimensions and body shape according to the avatar 41. The practice according to prior art is that the designer has to go through this design process for every other sizes the garment shall be available in. Embodiments of the third computer-implemented method solve this problem by making available an automatism for generating 3D garment models for any size other than the size of the designed model.

A bigger avatar 51 as shown in fig. 13 is provided and then dimensional and proportional differences between the first avatar 41 and the second avatar 51 can be determined. This may result in a matrix 60 as shown in fig. 14 which numerically indicates, in particular with respect to a plurality of spatial parameters, where the second avatar 51 differs from the first avatar 41. Fig. 14 may be understood to be a symbolic representation of the avatar differences, which do not necessarily be depictable as a 3D structure. The differences may as well be represented by a spreadsheet or dataset indicating the differences with respect to the, in particular 60 or more, parameters. For example, one of the parameters may refer to the size of the neck opening, another parameter may refer to the sleeve's length, and yet another parameter may refer to a circumference of the bottom hem.

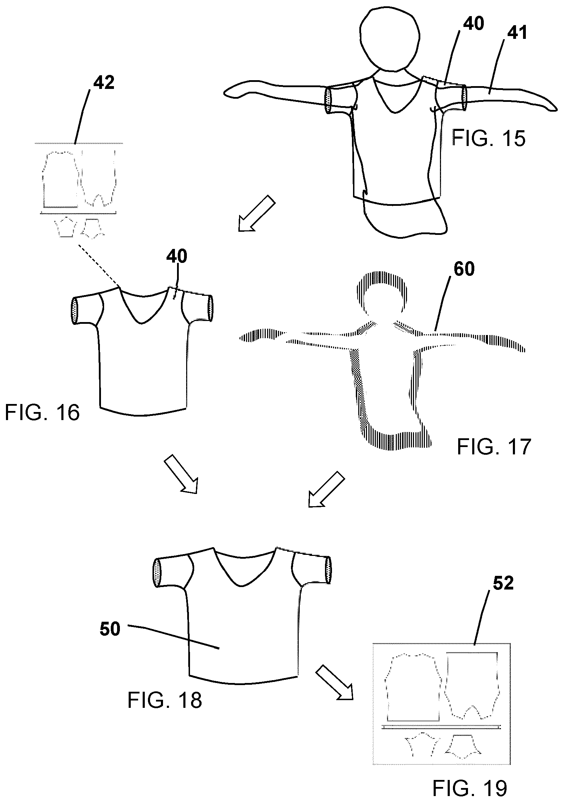

According to figs. 15-19, the 3D garment model 40, which is adapted for fitting the first avatar 41, is now modified to fit the second avatar 51. This is done by applying the matrix 60 of "forces" or deformations based on how the determined differences behave relative to the original 3D avatar 41. That is for example, if a hip-to-shoulder line of the second avatar 51 increased by ¾ inches, the 3D garment model is not simply stretched by the same amount but the length increase is put into perspective of the dimensions of the first avatar 41, which means the hip-to-shoulder-length is stretched by 2.5 %. Because there is a plurality of such deformation parameters, in particular 60 or more parameters, there might appear interdependencies between the deformations. In preferred embodiments of the third computer-implemented method, the parameter interdependencies are brought into equilibrium.

When applying the matrix to the t-shirt 40 to arrive at the modified t-shirt 50, the t-shirt 40 is uniformly expanded as depicted in figure 16 (as if being inflated by a shirt ironing machine).

The third computer-implemented method particularly provides that the 3D garment model 40 is associated with corresponding 2D patterns 42. In a preferred embodiment, the method further comprises deriving from the modified 3D garment model 50 a corresponding set of modified 2D patterns 52. In this way, a factory is, in a fast and efficient way, provided with a desired variety of 2D pattern pieces sets, each set fitting a differently sized and/or shaped human body.

In a combination with the aspects of the computer-implemented method of the invention, the adaption of the 3D garment model 40 may also take into account the embedded manufacturing definition models. For example, the modified model 50 may include longer zippers, additional buttons, stronger threads, or the required length of thread.

The avatar 51 may be obtained from a catalog of reference sized avatars, e.g. in standardized sizes and/or shapes. Alternatively, the avatar 51 can also be an individual body shape of a specific customer, e.g. a body shape scanned in 3D or an avatar parametrized by multiple measurements at the customers' body.

It is noted that the text in Fig. 7 is dummy text (lorem ipsum) the only purpose of which is to indicate that in such a document there may be several text passages for assembly guidance and similar comments addressed to the human user, i.e. not intended for being machine-readable.

## Claims

1. A computer-implemented method for embedding a manufacturing definition model (12) into a 3D garment model (20) representing a garment (1) to be fabricated, the computer-implemented method comprising:
- providing the 3D garment model (20),
- generating the manufacturing definition model (12) representing a garment element of the garment (1) and comprising manufacturing parameters which are necessary to manufacture the garment element, the garment element relating to
- assembly of the garment (1),
- a finish of the garment element, or
- an embellishment of the garment (1),
- providing manufacturing instructions (13a-b) describing how to manufacture the garment element, wherein providing the manufacturing instructions (13a-b) comprises automatically deriving the manufacturing instructions from the manufacturing definition model (12),
- determining the manufacturing definition model (12) or an area (12a) surrounding the manufacturing definition model (12) to be an access element (12b),
- linking the access element (12b) to the manufacturing instructions (13a-b),
- displaying the 3D garment model (20) on a graphical user interface (10),
- when the access element (12b) is selected and/or being hovered over by a pointing element (11), displaying the manufacturing instructions (13a-b) on the graphical user interface (10),
- embedding the manufacturing definition model (12) into the 3D garment model (20) at a designated position and orientation, and
- storing the 3D garment model (20), the manufacturing definition model (12) and the manufacturing instructions (13a-b) in a single data file (4).

2. The computer-implemented method according to claim 1, comprising, when the access element (12b) is selected and/or being hovered over by the pointing element (11), changing a view of the 3D garment model (20) on the graphical user interface (10) so as to display the manufacturing definition model (12) in more detail, wherein a pose and a magnification of the view are optimized.

3. The computer-implemented method according to claim 1, wherein the manufacturing instructions (13a-b) comprise at least one of:
- textual information,
- image data,
- arrows, and
- size data.

4. The computer-implemented method according to claim 1, comprising generating a plurality of manufacturing definition models (12) and embedding the plurality of manufacturing definition models (12) into the 3D garment model (20).

5. The computer-implemented method according to claim 4, wherein the plurality of manufacturing definition models (12) comprise representations of at least one of
- types of seams (3a),
- types of stitches (3b),
- decorative elements (3c),
- fabrics and colors (3d),
- specific types of buttons, and
- models of zippers, bows or apertures.

6. The computer-implemented method according to claim 4 or claim 5, comprising displaying on the graphical user interface (10) an order of the plurality of manufacturing definition models (12), the order representing steps in which the garment (1) is to be manufactured.

7. The computer-implemented method according to claim 4 or claim 5, wherein each of the plurality of manufacturing definition models (12) has at least a first version and a second version, wherein the plurality of first versions of manufacturing definition models are associated to a first colorway of the garment and the plurality of second versions of manufacturing definition models are associated to a second colorway of the garment.

8. The computer-implemented method according to claim 7, comprising
- receiving user input for switching between the first and second colorway of the garment, and
- displaying the 3D garment model (20) on the graphical user interface (10) with the first versions of the manufacturing definition models or with the second versions of the manufacturing definition models depending on the user input.

9. The computer-implemented method according to claim 1,
wherein the garment element is a seam with defined sewing stitches, or
wherein the garment element is a binding on a neck opening, a sleeve opening, a waist opening, or a bottom opening of the first garment, or
wherein the garment element is a closure on the garment, or
wherein the garment element is a pocket, a waistband, or a belt-loop on the garment, or
wherein the garment element comprises at least one of a collar and collar stand on a neck opening of the garment, or
wherein the garment element is an end-type of
- a sleeve,
- a pant leg,
- a dress, or
- a skirt.

10. The computer-implemented method according to claim 1, wherein the manufacturing definition model (12) comprises information relating to fabric properties of the garment element.

11. The computer-implemented method according to claim 1, comprising a factory receiving the single data file (4) and producing the garment based on the single data file (4).

12. The computer-implemented method according to claim 1, wherein the single data file (4) is a Garment Digital Twin file, and/or the method comprises providing a digital twin of the garment (1).

13. The computer-implemented method according to claim 1, wherein the single data file (4) comprises a 2D pattern document (6) comprising computer-readable 2D shapes of pattern pieces (7a-c) by which the 3D garment model (20) is virtually assembled according to rules (2), particularly wherein the rules (2) at least define with how much excess cloth garment panels by which the garment is assembled are sewed together.

14. The computer-implemented method according to claim 1, wherein the manufacturing parameters
- define how two pieces of cut cloth are to be joined or sewed together,
- comprise instructions for the assembly of a pocket or belt loops, and/or
- refer to the way of completing specific aspects of the garment, the aspects including at least one of a neck opening, a waist opening, an end of a sleeve, a bottom of a pant leg, and a bottom of a dress or skirt.

## Patentansprüche

1. Computerimplementiertes Verfahren zum Einbetten eines Fertigungsdefinitionsmodells (12) in ein 3D-Kleidungsstückmodell (20), das ein herzustellendes Kleidungsstück (1) darstellt, wobei das computerimplementierte Verfahren Folgendes umfasst:
- Bereitstellen des 3D-Kleidungsstückmodells (20),
- Erzeugen des Fertigungsdefinitionsmodells (12), das ein Kleidungsstückelement des Kleidungsstücks (1) darstellt und Fertigungsparameter umfasst, die zur Fertigung des Kleidungsstückelements erforderlich sind, wobei sich das Kleidungsstückelement auf Folgendes bezieht:
- Zusammensetzen des Kleidungsstücks (1),
- eine Ausführung des Kleidungsstückelements oder
- eine Verzierung des Kleidungsstücks (1),
- Bereitstellen von Fertigungsanweisungen (13a-b), die beschreiben, wie das Kleidungsstückelement zu fertigen ist, wobei das Bereitstellen der Fertigungsanweisungen (13a-b) das automatische Ableiten der Fertigungsanweisungen aus dem Fertigungsdefinitionsmodell (12) umfasst,
- Bestimmen des Fertigungsdefinitionsmodells (12) oder eines Bereichs (12a) um das Fertigungsdefinitionsmodell (12) herum als Zugriffselement (12b),
- Verbinden des Zugriffselements (12b) mit den Fertigungsanweisungen (13a-b),
- Anzeigen des 3D-Kleidungsstücksmodells (20) auf einer grafischen Benutzerschnittstelle (10),
- wenn das Zugriffselement (12b) ausgewählt und/oder mit einem Zeigeelement (11) überstrichen wird, Anzeigen der Fertigungsanweisungen (13a-b) auf der grafischen Benutzerschnittstelle (10),
- Einbetten des Fertigungsdefinitionsmodells (12) in das 3D-Kleidungsstückmodell (20) an einer bezeichneten Position und Ausrichtung, und
- Speichern des 3D-Kleidungsstückmodells (20), des Fertigungsdefinitionsmodells (12) und der Fertigungsanweisungen (13a-b) in einer einzelnen Datendatei (4).

2. Computerimplementiertes Verfahren nach Anspruch 1, umfassend, wenn das Zugriffselement (12b) ausgewählt und/oder mit dem Zeigeelement (11) überstrichen wird, das Ändern einer Ansicht des 3D-Kleidungsstückmodells (20) auf der grafischen Benutzerschnittstelle (10), um das Fertigungsdefinitionsmodell (12) detaillierter anzuzeigen, wobei eine Pose und eine Vergrößerung der Ansicht optimiert werden.

3. Computerimplementiertes Verfahren nach Anspruch 1, wobei die Fertigungsanweisungen (13a-b) mindestens eines von Folgendem umfassen:
- Textinformationen,
- Bilddaten,
- Pfeile und
- Größendaten.

4. Computerimplementiertes Verfahren nach Anspruch 1, umfassend das Erzeugen einer Vielzahl von Fertigungsdefinitionsmodellen (12) und das Einbetten der Vielzahl von Fertigungsdefinitionsmodellen (12) in das 3D-Kleidungsstückmodell (20).

5. Computerimplementiertes Verfahren nach Anspruch 4, wobei die Vielzahl von Fertigungsdefinitionsmodellen (12) Darstellungen von mindestens einem von Folgendem umfasst:
- Arten von Nähten (3a),
- Arten von Stichen (3b),
- dekorative Elemente (3c),
- Stoffe und Farben (3d),
- spezifische Arten von Knöpfen und
- Modelle von Reißverschlüssen, Schleifen oder Öffnungen.

6. Computerimplementiertes Verfahren nach Anspruch 4 oder Anspruch 5, umfassend das Anzeigen einer Reihenfolge der Vielzahl von Fertigungsdefinitionsmodellen (12) auf der grafischen Benutzerschnittstelle (10), wobei die Reihenfolge Schritte darstellt, in denen das Kleidungsstück (1) gefertigt werden soll.

7. Computerimplementiertes Verfahren nach Anspruch 4 oder Anspruch 5, wobei jedes der Vielzahl von Fertigungsdefinitionsmodellen (12) mindestens eine erste Version und eine zweite Version aufweist, wobei die Vielzahl von ersten Versionen der Fertigungsdefinitionsmodelle einer ersten Farbvariante des Kleidungsstücks zugeordnet ist und die Vielzahl von zweiten Versionen der Fertigungsdefinitionsmodelle einer zweiten Farbvariante des Kleidungsstücks zugeordnet ist.

8. Computerimplementiertes Verfahren nach Anspruch 7, umfassend
- das Empfangen von Benutzereingaben zum Umschalten zwischen der ersten und der zweiten Farbvariante des Kleidungsstücks und
- das Anzeigen des 3D-Kleidungsstückmodells (20) auf der grafischen Benutzerschnittstelle (10) mit den ersten Versionen der Fertigungsdefinitionsmodelle oder mit den zweiten Versionen der Fertigungsdefinitionsmodelle in Abhängigkeit von den Benutzereingaben.

9. Computerimplementiertes Verfahren nach Anspruch 1, wobei das Kleidungsstückelement eine Naht mit definierten Nähstichen ist, oder wobei das Kleidungsstückelement eine Einfassung an einer Halsöffnung, einer Ärmelöffnung, einer Taillenöffnung oder einer unteren Öffnung des ersten Kleidungsstücks ist, oder
wobei das Kleidungsstückelement ein Verschluss am Kleidungsstück ist, oder
wobei das Kleidungsstückelement eine Tasche, ein Bund oder eine Gürtelschlaufe am Kleidungsstück ist, oder
wobei das Kleidungsstückelement mindestens eines von einem Kragen und einem Kragensteg an einer Halsöffnung des Kleidungsstücks umfasst, oder
wobei das Kleidungsstückelement ein Endtyp von
- einem Ärmel,
- einem Hosenbein,
- einem Kleid oder
- einem Rock
ist.

10. Computerimplementiertes Verfahren nach Anspruch 1, wobei das Fertigungsdefinitionsmodell (12) Informationen bezüglich der Stoffeigenschaften des Kleidungsstückelements umfasst.

11. Computerimplementiertes Verfahren nach Anspruch 1, umfassend eine Fabrik, die die einzelne Datendatei (4) empfängt und das Kleidungsstück auf der Grundlage der einzelnen Datendatei (4) produziert.

12. Computerimplementiertes Verfahren nach Anspruch 1, wobei die einzelne Datendatei (4) eine Datei mit einem digitalen Zwilling des Kleidungsstücks ist und/oder wobei das Verfahren das Bereitstellen eines digitalen Zwillings des Kleidungsstücks (1) umfasst.

13. Computerimplementiertes Verfahren nach Anspruch 1, wobei die einzelne Datendatei (4) ein 2D-Schnittmusterdokument (6) umfasst, das computerlesbare 2D-Formen von Schnittmusterteilen (7a-c) umfasst, anhand derer das 3D-Kleidungsstückmodell (20) gemäß Regeln (2) virtuell zusammengesetzt wird, wobei insbesondere die Regeln (2) zumindest definieren, mit wie viel Stoffüberschuss die Kleidungsstück-Schnittteile, aus denen das Kleidungsstück zusammengesetzt wird, zusammengenäht werden.

14. Computerimplementiertes Verfahren nach Anspruch 1, wobei die Fertigungsparameter
- definieren, wie zwei Teile von zugeschnittenem Stoff miteinander verbunden oder zusammengenäht werden sollen,
- Anweisungen für die Anbringung einer Tasche oder von Gürtelschlaufen umfassen und/oder
- sich auf die Art und Weise beziehen, wie spezifische Aspekte des Kleidungsstücks fertiggestellt werden, wobei die Aspekte mindestens eines von einer Halsöffnung, einer Taillenöffnung, einem Ende eines Ärmels, einer Unterkante eines Hosenbeins und einer Unterkante eines Kleids oder Rocks beinhalten.

## Revendications

1. Procédé mis en œuvre par ordinateur pour intégrer un modèle de définition de fabrication (12) dans un modèle de vêtement 3D (20) représentant un vêtement (1) à fabriquer, le procédé mis en œuvre par ordinateur comprenant les étapes consistant à :
- fournir le modèle de vêtement 3D (20),
- générer le modèle de définition de fabrication (12) représentant un élément de vêtement du vêtement (1) et comprenant les paramètres de fabrication nécessaires à la fabrication de l'élément de vêtement, l'élément de vêtement étant lié à
- l'assemblage du vêtement (1),
- une finition de l'élément de vêtement ou
- un embellissement du vêtement (1),
- fournir des instructions de fabrication (13a-b) décrivant comment fabriquer l'élément de vêtement, dans lequel fournir les instructions de fabrication (13a-b) consiste à dériver automatiquement les instructions de fabrication à partir du modèle de définition de fabrication (12),
- déterminer le modèle de définition de fabrication (12) ou une zone (12a) entourant le modèle de définition de fabrication (12) comme étant un élément d'accès (12b),
- lier l'élément d'accès (12b) aux instructions de fabrication (13a-b),
- afficher le modèle de vêtement 3D (20) sur une interface utilisateur graphique (10),
- lorsque l'élément d'accès (12b) est sélectionné et/ou survolé par un élément de pointage (11), afficher les instructions de fabrication (13a-b) sur l'interface utilisateur graphique (10),
- intégrer le modèle de définition de fabrication (12) dans le modèle de vêtement 3D (20) à une position et une orientation désignées, et
- stocker le modèle de vêtement 3D (20), le modèle de définition de fabrication (12) et les instructions de fabrication (13a-b) dans un fichier de données unique (4).

2. Procédé mis en œuvre par ordinateur selon la revendication 1, comprenant l'étape consistant, lorsque l'élément d'accès (12b) est sélectionné et/ou survolé par l'élément de pointage (11), à modifier une vue du modèle de vêtement 3D (20) sur l'interface utilisateur graphique (10) afin d'afficher le modèle de définition de fabrication (12) de manière plus détaillée, dans lequel une pose et un agrandissement de la vue sont optimisés.

3. Procédé mis en œuvre par ordinateur selon la revendication 1, dans lequel les instructions de fabrication (13a-b) comprennent au moins l'un des éléments suivants :
- des informations textuelles,
- des données d'image,
- des flèches et
- des données de taille.

4. Procédé mis en œuvre par ordinateur selon la revendication 1, comprenant l'étape consistant à générer une pluralité de modèles de définition de fabrication (12) et à intégrer la pluralité de modèles de définition de fabrication (12) dans le modèle de vêtement 3D (20).

5. Procédé mis en œuvre par ordinateur selon la revendication 4, dans lequel la pluralité de modèles de définition de fabrication (12) comprend des représentations d'au moins l'un des éléments suivants :
- types de coutures (3a),
- types de points (3b),
- éléments décoratifs (3c),
- tissus et couleurs (3d),
- types spécifiques de boutons et
- modèles de fermetures à glissière, de boucles ou d'ouvertures.

6. Procédé mis en œuvre par ordinateur selon la revendication 4 ou la revendication 5, comprenant l'étape consistant à afficher sur l'interface utilisateur graphique (10) un ordre de la pluralité de modèles de définition de fabrication (12), l'ordre représentant les étapes suivant lesquelles le vêtement (1) doit être fabriqué.

7. Procédé mis en œuvre par ordinateur selon la revendication 4 ou la revendication 5, dans lequel chacun de la pluralité de modèles de définition de fabrication (12) présente au moins une première version et une deuxième version, dans lequel la pluralité de premières versions de modèles de définition de fabrication sont associées à un premier coloris du vêtement et la pluralité de deuxièmes versions de modèles de définition de fabrication sont associées à un deuxième coloris du vêtement.

8. Procédé mis en œuvre par ordinateur selon la revendication 7, comprenant les étapes consistant à
- recevoir une entrée utilisateur pour basculer entre le premier et le deuxième coloris du vêtement, et
- afficher le modèle de vêtement 3D (20) sur l'interface utilisateur graphique (10) avec les premières versions des modèles de définition de fabrication ou avec les deuxièmes versions des modèles de définition de fabrication en fonction de l'entrée utilisateur.

9. Procédé mis en œuvre par ordinateur selon la revendication 1,
dans lequel l'élément de vêtement est une couture avec des points de couture définis, ou
dans lequel l'élément de vêtement est une bordure sur une ouverture de cou, une ouverture de manche, une ouverture de taille ou une ouverture inférieure du premier vêtement, ou
dans lequel l'élément de vêtement est une fermeture sur le vêtement, ou
dans lequel l'élément de vêtement est une poche, une ceinture ou un passant de ceinture sur le vêtement, ou
dans lequel l'élément de vêtement comprend au moins l'un d'un col et d'un pied de col sur une ouverture de col du vêtement, ou
dans lequel l'élément de vêtement est un type d'extrémité
- d'une manche,
- d'une jambe de pantalon,
- d'une robe ou
- d'une jupe.

10. Procédé mis en œuvre par ordinateur selon la revendication 1, dans lequel le modèle de définition de fabrication (12) comprend des informations relatives aux propriétés du tissu de l'élément de vêtement.

11. Procédé mis en œuvre par ordinateur selon la revendication 1, comprenant une usine recevant le fichier de données unique (4) et produisant le vêtement sur la base du fichier de données unique (4).

12. Procédé mis en œuvre par ordinateur selon la revendication 1, dans lequel le fichier de données unique (4) est un fichier jumeau numérique de vêtement, et/ou le procédé comprend l'étape consistant à fournir un jumeau numérique du vêtement (1).

13. Procédé mis en œuvre par ordinateur selon la revendication 1, dans lequel le fichier de données unique (4) comprend un document de patron 2D (6) comprenant des formes 2D lisibles par ordinateur de pièces de patron (7a-c) à partir desquelles le modèle de vêtement 3D (20) est assemblé virtuellement selon des règles (2), en particulier dans lequel les règles (2) définissent au moins la quantité de tissu excédentaire avec laquelle les panneaux de vêtement à partir desquels le vêtement est assemblé sont cousus ensemble.

14. Procédé mis en œuvre par ordinateur selon la revendication 1, dans lequel les paramètres de fabrication
- définissent la manière dont deux pièces de tissu coupées doivent être assemblées ou cousues ensemble,
- comprennent des instructions pour l'assemblage d'une poche ou de passants de ceinture, et/ou
- font référence à la manière de réaliser des aspects spécifiques du vêtement, les aspects incluant au moins un élément parmi une ouverture de cou, une ouverture de taille, une extrémité d'une manche, un bas d'une jambe de pantalon et un bas d'une robe ou d'une jupe.
